# EUROPEAN PATENT SPECIFICATION

(11) **EP 2 200 266 B1**
(45) Date of publication and mention of the grant of the patent: **11.02.2015**
(21) Application number: 09252750.6
(22) Date of filing: 08.12.2009
(51) Int. Cl.: H04N 1/00

(54) **Apparatus, method, system, and computer program for setting image processing apparatus, and medium for storing such program**
Vorrichtung, Verfahren, System und Computerprogramm zum Einstellen eines Bildverarbeitungsgeräts, und Medium zur Speicherung eines ähnlichen Programms
Appareil, procédé, système et logiciel de réglage d'un appareil de traitement d'images, et support d'enregistrement d'un tel logiciel

(30) Priority: 19.12.2008 JP 2008323580
(43) Date of publication of application: 23.06.2010
(73) Proprietor: Ricoh Company, Ltd., Tokyo 143-8555 (JP)
(72) Inventor: Keisuke, Tsukada, Tokyo (JP); Mitsuo, Nakamura, Tokyo (JP)
(74) Representative: Mounteney, Simon James

(56) References cited:
- EP-A1- 1 722 514
- EP-A2- 1 781 006
- JP-A- 2008 176 789
- US-A1- 2007 223 670

## Description

The present invention relates generally to an apparatus, method, system, and computer program and product for setting an image processing apparatus, and more specifically to an apparatus, method, system, and computer program and product for setting a plurality of parameters to be used for controlling an image processing apparatus.

The recent image processing apparatus is provided with a wide variety of functions such that various setting data needs to be set such as the transfer current set parameter, the fixed temperature set parameter, the main scanning registration adjustment data, the sub-scanning registration adjustment data, the color space registration setting data, and the temperature sensor set value data. In addition to the setting data regarding image processing or image forming, the network-related data needs to be set if network communication or email communication is to be performed. Such setting data may be usually set at the time of manufacturing the image processing apparatus. Further, setting data regarding various parameters may be set before shipping of the image processing apparatus.

The setting data regarding the parameters is set when the image processing apparatus is in the setting mode such as the parameter setting mode. The setting mode is allowed for an authorized user such as an administrator so that the setting data is protected from undesired modification or alternation. The mode of the image processing apparatus is changed to the setting mode when the user is authenticated through a specially provided login account. More specifically, the setting mode is changed only when the user is authenticated as an administrator.

In the background art, setting of the parameters is manually performed by the operator at the time of checking the image processing apparatus. However, as the types of parameters increase and the setting value for each parameter differs among various apparatus, manually setting of the parameters becomes cumbersome such that the time needed for setting increases. Further, as setting of the parameters becomes more complex, an error in setting the parameters tends to increase.

In view of the above, a technique for setting various data has been disclosed, for example, as described in the Japanese Patent Application Publication No. 2008-176789. The Patent Application Publication No. 2008-176789 generates a webpage which is embedded with a processing function each of which corresponds to one of a plurality of functions of the image forming apparatus.
The image forming apparatus described in the Patent Application Publication No. 2008-176789 transfers data from a computer to the image forming apparatus through an open network connection. For improved security, the use of open network connection is not encouraged.

Further, once the image processing apparatus is changed to the setting mode, the setting mode is not changed unless the image processing apparatus receives an instruction from the operator to change the mode even when the image processing apparatus is turned off. More specifically, the image processing apparatus is prevented from changing the mode even when the image processing apparatus is turned off due to the power failure or the other trouble which may occur during the checking process. This may cause the security problem as the image processing apparatus may be accessed by any user if the administrator fails to change the mode of the image processing apparatus back to the operation mode.

US2007/0223670 discloses an image processing apparatus comprising a network communication means for establishing a connection of the image processing apparatus with a data setting apparatus and for receiving a plurality of parameter values from the data setting apparatus, and a parameter setting means for setting the plurality of parameter values to the image processing apparatus so as to cause the image processing apparatus to perform the plurality of functions according to the plurality of parameter values, wherein the network communication means receives a parameter setting request being addressed to a specific resource which is set to be used in the image processing apparatus is in the setting mode.

The present invention is the apparatus, system and method of claims 1, 2 and 6, which advantageously provides a system for setting an image processing apparatus including an image processing apparatus and a data setting apparatus, which are connected through an exclusive connection, thus improving the security.

Further, in order to improve the efficiency in setting various parameters, the data setting apparatus of the present invention transfers the setting data regarding various parameters to the image processing apparatus using the technology such as a file transfer protocol. Further, the image processing apparatus allows various parameters which are received from the data setting apparatus to be automatically set using a remote calling such as a remote procedure call (RPC).

The system of the present invention automatically sets the plurality of parameter values at once and automatically checks whether setting of all of the parameter values is completed. This improves the efficiency in the checking process, reduces the work load of the operator, and improves the reliability in the process of initializing the image processing apparatus.

Additionally, the system of the present invention is capable of checking whether the mode of the image processing apparatus is changed from the setting mode to the operation mode at the time of ending the checking process. Further, the system of the present invention preferably records the log of the parameters that are set, which may be used for management.

More specifically, embodying one aspect of the present invention, a personal computer which functions as the data setting apparatus is provided to set a plurality of parameter values at once and check whether the values are set for all parameters, This improves the efficiency in the checking process as well as the reliability in the process of initializing the image processing apparatus.

According to another aspect of the present invention, an exclusive connection is established between the image processing apparatus and the data setting apparatus, which only allows transactions between the image processing apparatus and the data setting apparatus. Setting of the parameters is performed through the exclusive connection. In one example, the exclusive connection is the peer-to-peer connection using the cross cable. In another example, the exclusive connection is the ad-hoc connection using the wireless communication.

In order to establish the exclusive connection, when the image processing apparatus is changed to the setting mode, the image processing apparatus preferably reads out from a memory a network address and a resource address each of which are used at the time of setting the parameters at the setting mode, and set the read network address and resource address as network data. The data setting apparatus obtains the network data such as the network address and the resource address from the image processing apparatus, and establishes the exclusive connection such as the P2P connection or ad-hoc connection.

In a preferred embodiment, after the parameter values are set to be processed into XML, the data setting apparatus sends the XML data to the resource address set by the image processing apparatus. When the parameter values are sent to the resource address, the image processing apparatus calls the parameter setter 166 to cause the parameter setter 166 to register the parameter values that are sent in any desired non-volatile storage device as a set value for the image processing apparatus.

The image processing apparatus records the result of setting the parameter values as an operation log. At the time of ending the setting mode, the image processing apparatus outputs the hard copy of the operation log. The data setting apparatus checks for unset parameter values or the mode of the image processing apparatus. When the unset parameter values or the setting mode is detected, the data setting apparatus sends an alarm to the operator. In this manner, the data setting apparatus manages setting of the parameters as well as setting of the mode of the image processing apparatus.

As described above, setting of the parameters or checking of the parameters for the image processing apparatus may be performed more effcientfy in less time and with high accuracy. Further, the reliability in the process of initializing the image processing apparatus is improved such that the checking process of the image processing apparatus becomes more productive.

A more complete appreciation of the disclosure and many of the attendant advantages and features thereof can be readily obtained and understood from the following detailed description with reference to the accompanying drawings, wherein:

FIG. 1 is a schematic block diagram illustrating a system of setting an image processing apparatus including a data setting apparatus and the image processing apparatus, which are connected through an exclusive connection, according to an example embodiment of the present invention;

FIG. 2 is a functional list to be used for transactions between the data setting apparatus and the image processing apparatus of FIG. 1;

FIG. 3A is a flowchart illustrating operation of setting parameters of the image processing apparatus of FIG. 1, performed by the operator through the system of FIG. 1;

FIG. 3B is an illustration for explaining connection or disconnection of the image processing apparatus with a USB memory and the data setting apparatus of FIG. 1, concurrently performed by the operator when performing the operation of FIG. 3A;

FIG. 4 is a flowchart illustrating operation of checking whether all parameters are set, performed by the data setting apparatus during the operation of FIG. 3A;

FIG. 5 is an illustration for explaining an alarm screen to be displayed by the data setting apparatus of FIG. 1 when the unset parameter is detected;

FIG. 6 is a flowchart illustrating operation of ending the operation of setting, performed by the data setting apparatus of FIG. 1 during the operation of FIG. 3A;

FIG. 7 is an illustration for explaining a set log report to be output by the image processing apparatus of FIG. 1 at desired timing after ending the setting operation; and

FIG. 8 is an illustration for explaining a setting operation log report generated based on the set log report of FIG. 7 and to be sent to a management server trough a network.

The accompanying drawings are intended to depict example embodiments of the present invention and should not be interpreted to limit the scope thereof. The accompanying drawings are not to be considered as drawn to scale unless explicitly noted.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

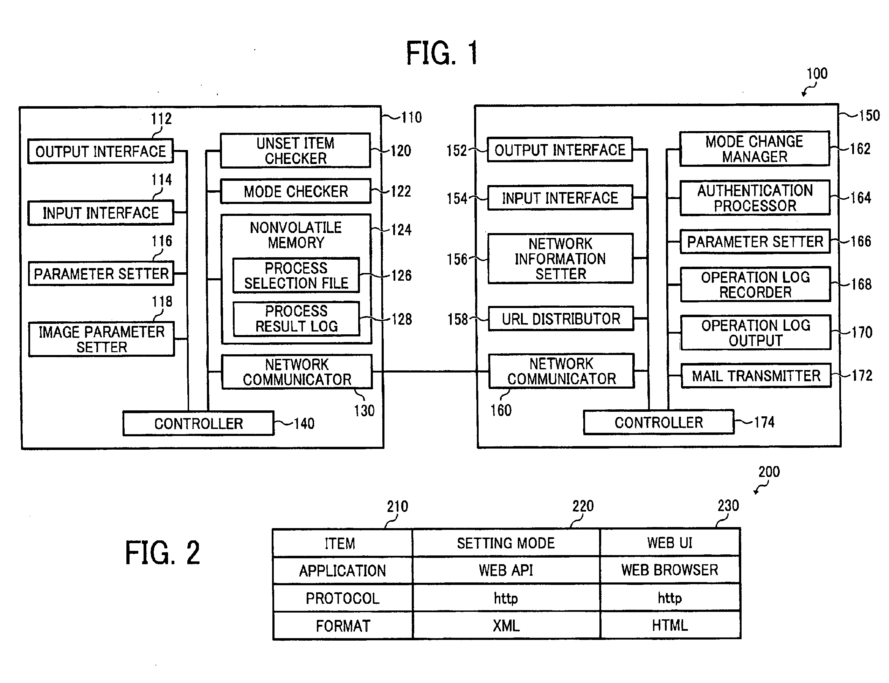

FIG. 1 illustrates a schematic diagram illustrating a configuration of a parameter setting system 100 including a data setting apparatus 110 and an image processing apparatus 150, which are connectable with each other When connected, an exclusive connection is established between the image processing apparatus 150 and the data setting apparatus 110 to allow a user to set various parameters of the image processing apparatus 150 using the data setting apparatus 110. In this example illustrated in FIG. 1, the data setting apparatus 110 is implemented by a personal computer. The data setting apparatus 110 includes a central processing unit (CPU) such as any desired processor, which functions as a controller 140. The data setting apparatus 110 further includes a memory such as a random access memory (RAM) and a read only memory (ROM). The data setting apparatus 110 is initially set using the Basic Input Output System (BIOS), and operated under the operation system such as the Windows, Unix, Linux, Mac, etc.

Further, in this example, the specific application program, which may be written in any desired programming language such as C, C++, Visual Basic, or Java, is loaded onto the RAM of the personal computer, for example, from a hard disk device to cause the personal computer to function as the data setting apparatus 110 capable of allowing a user to set various parameters of the image processing apparatus 150. More specifically, in order to set various parameters of the image processing apparatus 150, the data setting apparatus 110 accesses a Uniform Resource Locator (URL) for parameter setting, which is provided by the image processing apparatus 150, using browser software installed onto the data setting apparatus 110 such as the Internet Explorer, FireFox, Mozilla, or Opera.

Further, the data setting apparatus 110 is provided with the function of generating XML data such as the XML editor, XSLT (XSL Transformations), etc. With such function, the data setting apparatus 110 generates XML data based on the various parameter values that have been set by the user, and send the XML data to the image processing apparatus 100.

Still referring to FIG. 1, the data setting apparatus 110 includes an output interface 112, an input interface 114, and a network communicator 130. The output interface 112 uses the standard such as VGA or XGA to cause the processing result of the data setting apparatus 110 to be displayed to an operator. In this example, the output interface 112 is implemented by the hardware such as the graphic accelerator or RAMDAC, or various drivers. The output interface 112 may be implemented by or connected to a display device such as a liquid crystal display. The input interface 114 receives a user input specifying a request from an input device such as a keyboard or mouse, and processes a requested event, and causes the controller 140 to perform processing specified by the user input.

The network communicator 130, which is implemented by a network interface card (NIC), functions as the physical layer and the data link layer to allow the peer-to-peer (P2P) connection using the Ethernet. The network communicator 130 of the data setting apparatus 110 may establish the P2P connection with the image processing apparatus 150 using any desired wireless communication protocol such as the IrDA or Bluetooth.

The data setting apparatus 110, which allows the user to set various parameters, is provided with a parameter setter 116, an image parameter setter 118, and a mode checker 112. The parameter setter 116 receives an instruction for setting parameters from the operator who sets various parameters, registers the various parameters onto a process result log 128, and sets the registered parameters to be processed into XML data. The image parameter setter 118 receives a test pattern image obtained by the image processing apparatus 150, detects whether any trouble exists such as the shift in image registration or the trouble with tone characteristics, and calculates an adjustment value to correct the detected trouble. The image parameter setter 118 sets the calculated adjustment value as a parameter value to be processed into the XML data. After setting the parameters, the parameter setter 116 and the image parameter setter 118 sends the XML data to a resource address set by the image processing apparatus 100, such as the URL, through the network communicator 130.

The data setting apparatus 100 further includes an unset item checker 120, which checks whether all parameters that are supposed to be set have been set when notification indicating the completion of the setting mode is sent from the image processing apparatus 150, for example, by comparing the set parameters registered into the process result log 128 and a process selection file 126. In this example, the process selection file 126 stores information regarding a plurality of items that need to be checked or adjusted, such as information regarding a plurality of parameters that needs to be set. The mode checker 122 monitors a status of the mode of the image processing apparatus 150. For example, when an instruction for turning off the power of the image processing apparatus 150 is received from the operator through the image processing apparatus 150, the mode checker 122 refers to the status data such as a flag indicating whether the operation mode of the image processing apparatus 150 is changed from the setting mode to the operation mode to determine whether the image processing apparatus 150 is in the setting mode. In this example, the operation mode is the mode which allows the user to perform a plurality of functions of the image processing apparatus 150 such as printing. The setting mode is the mode which allows the user to perform operation of setting various parameters. When it is determined that the image processing apparatus 150 is still in the setting mode, the mode checker 122 causes the data setting apparatus 110 to display an alarm screen to the operator.

The data processing apparatus 110 further includes a non-volatile memory 124, which is implemented by any desired memory such as the EEPROM or flash memory. The process selection file 126 stores various parameters to be set using the image processing apparatus 150. The process result log 128 registers therein the log of the process result, which is the result of setting the parameters using the parameter setter 116. Since the process result log is registered, the data setting apparatus 110 is able to check whether all parameters have been set, and notify the operator if there are unset parameters before proceeding to the next operation.

Still referring to FIG. 1, a functional structure of the image processing apparatus 150 is explained. In this example, the image processing apparatus 150 is implemented by a multifunctional apparatus (MFP) capable of providing a plurality of functions including the function of obtaining image data, copying, sending or receiving facsimile data, communicating via network, and communicating using the web, etc. The image processing apparatus 150 includes a hardware structure such as a CPU, RAM, ROM, hard disk device, etc., which performs various operation of image processing or network communication according to an embedded program operable under control of the OS such as LINUX, UNIX, or FreeBSD.

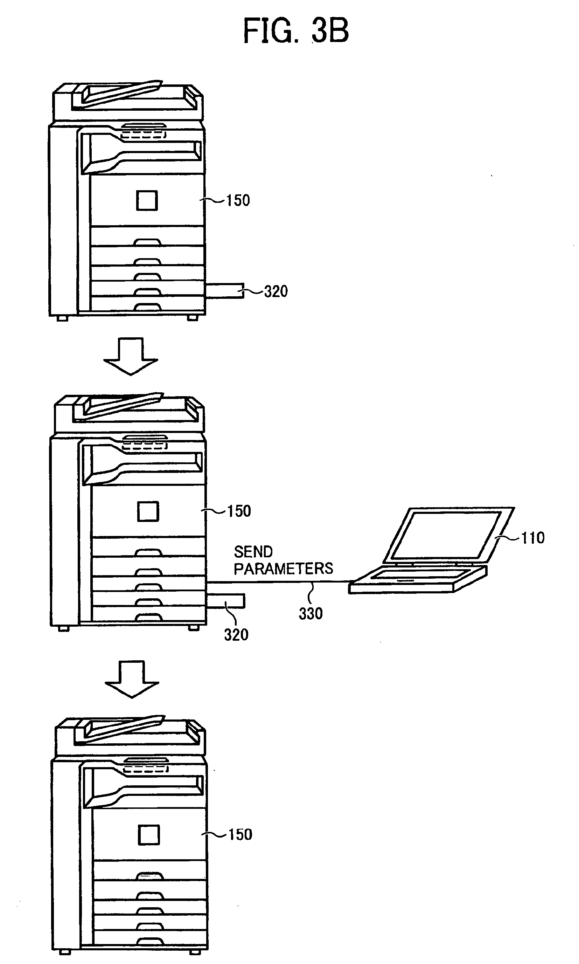

The image processing apparatus 150 includes a universal serial bus (USB) driver or connector. From a USB memory 320 (FIG. 3B), which functions as an external memory connectable to the image processing apparatus 150, the image processing apparatus 150 reads various information such as network configuration information for parameter setting or parameter setting log and stores the read information within its internal memory. Various operations or functions, which will be described below, are performed by the image processing apparatus 150 when the CPU, which functions as a controller 174, of the image processing apparatus 150 loads a specific application program onto an execution area such as the RAM.

The image processing apparatus 150 includes an output interface 152 and an input interface 154. The output interface 152 is capable of sending various messages to the user of the image processing apparatus 150. The input interface 152 is capable of receiving various user instructions from the user to cause the image processing apparatus 150 to start operation according to the user instruction through the controller 174. The output interface 152 and the input interface 152 may be implemented by a touch panel, various operation buttons or keys, microphone, speaker, display such as liquid crystal display, etc.

The image processing apparatus 150 further includes a network information setter 156, an URL distributor 158, and a network communicator 160. The network information setter 156 is used for a restricted time period such as during the time for setting various parameters when the image processing apparatus 150 is in the setting mode. The network information setter 156 manages network configuration information to be used for the P2P connection or ad-hoc connection such as the IP address, port number such as TCP/IP port number or UDP port number, or URL setting data. When the mode of the image processing apparatus 150 is changed to the setting mode, the image processing apparatus 150 completes various settings regarding the network configuration before allowing the user to start setting of various parameters. More specifically, in the setting mode, the network information setter 156 changes the network configuration of the image processing apparatus 150 from the current network configuration such as the current IP address to the specific network configuration such as the specific IP address according to the network configuration information. The network configuration information may be stored within the internal memory of the image processing apparatus 150. Alternatively, the network configuration information may be stored within the external memory such as the USB memory 320. The USB memory 320 may store any other information, for example, the log information indicating the log of the result or processing setting of various parameters.

The URL distributor 158 sends data, such as the request for setting parameters, to the URL specified by a request for setting parameters received from the data setting apparatus 110. In this example, a specific URL has been previously registered such that it is to be used only for setting the parameters when the network information setter 156 sets the network configuration information as described above. When the request for setting parameters ("parameter setting request") is received from the data setting apparatus 110, the URL distributor 158 obtains various parameter values included in the parameter setting request, and calls various application that are each registered with respect to the specific URL to cause each application to perform specific processing. In this example, the parameter setting request is transferred using a HTTP protocol.

The network communicator 160 provides the function of controlling communication through a physical medium, which supports the communication protocol implemented by the data setting apparatus 110. For example, the network communicator 160 may be implemented by a network interface card, or a wireless communication device that is connectable to the image processing apparatus 100 through the USB connector.

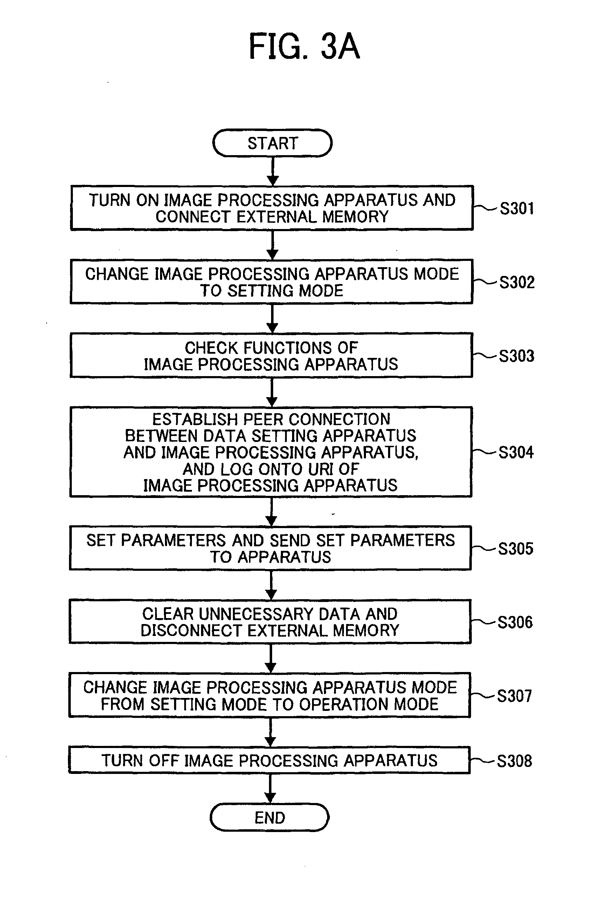

The image processing apparatus 150 further includes a mode change manager 162, an authentication processor 164, and a parameter setter 166. When an instruction for changing the mode of the image processing apparatus 150 is received from the operation through input interface 154, the mode change manager 162 manages the change, or transition, of the mode between the operation mode and the setting mode based on the authentication result of the authentication processor 164. Further, the mode change manager 162 send notification to the data setting apparatus 110 information regarding the mode status of the image processing apparatus 150. The authentication processor 164 manages user information such as the password or User ID. Specifically, in this example, the authentication processor 164 determines whether to allow the mode of the image processing apparatus 150 to change from the operation mode to the setting mode by checking whether the user is an administrator who is allowed to set parameters by checking the password and the user ID of the user. In this example, the user may input the user ID and the password through the input interface 154. Alternatively, as described below referring to FIG. 3A, the authentication processor 164 may check authentication of the user based on the authentication information obtainable from the external memory such as the USB memory 320 or whether the USB memory 320 is connected.

The parameter setter 166 is implemented by an application program, which sets parameters through the URL specified by the URL distributor 158. The operation log recorder 168 stores the result of setting parameters, which is set by the data setting apparatus 110, in a memory such as the external memory. The operation log output 170 executes an image forming engine to output the operation log. The image processing apparatus 150 further includes a mail transmitter 172, which sends an email using the desired protocol such as SMTP. The email may include information regarding the operation log.

In this example, the data setting apparatus 110 and the image processing apparatus 150 are connected through the P2P, or through the ad-hoc connection for the short distance, using a cross cable. The P2P connection may be established by performing the following steps.

(1) The mode of the image processing apparatus 150 is set to the setting mode.

(2) The IP address or the URL, which can be called only at the setting mode, is set.

(3) The data setting apparatus 110 and the image processing apparatus 150 are connected through the cross cable.

(4) The data setting apparatus 110 issues a request command. The request command includes, for example, PING command or ARP command. More specifically, the request command is sent to the IP address set at (2), and receives the ICMP response. The data setting apparatus 110 is registered with the IP address set at (2) to establish the P2P connection.

Alternatively, the ad-hoc connection may be established between the image processing apparatus 150 and the data setting apparatus 110 using the wireless communication such as the IrDA or Bluetooth. In such case, the physical cable that connects the image processing apparatus 150 and the data setting apparatus 110 is not necessary such that the work efficiency may improve. After the connection is recognized using the beacon/beacon response pair, the MAC address is registered as well as the IP address set at (2) is registered using the PING command to establish the ad-hoc network P2P communication between the data setting apparatus 110 and the image processing apparatus 150.

In the case of establishing the wireless ad-hoc connection, in order to prevent the image processing apparatus 150 from connecting to more than one apparatus, the process of (2) is held until the setting mode is started. Alternatively, the process of (2) may be started when the image processing apparatus 150 directly receives an instruction from the operator. Alternatively, the output level may be adjusted such as by restricting the class for the Bluetooth connection to use only the class 3. This restricts a communication range for the communication received from the data setting apparatus 110 to be specified within a range in which the image processing apparatus 150 can be specified.

FIG. 2 illustrates a functional list to be referred by the network communicator 130 of the data setting apparatus 110 and by the network communicator 160 of the image processing apparatus 150. The column 210 of the functional list 200 lists a plurality of items including an application such as a client application, a data transfer protocol, and a data format, each of which are the items specifying a communication method. The column 220 of the functional list 200 specifies the communication method to be used during the setting mode, specifically, for the transactions performed between the data setting apparatus 110 and the image processing apparatus 150. The column 230 of the functional list 200 specifies the communication method to be used during the setting mode, specifically, for a user interface to communicate with the operator.

As illustrated in the column 220 of the functional list 200, the data setting apparatus 110 and the image processing apparatus 150 transfers XML data using the HTTP. In this example, the image processing apparatus 150 is provided with the XML ATOM protocol to manage the XML file or execute the application according to the standard described, for example, in RFC4287 or RFC5023. When the image processing apparatus 150 receives a parameter setting request from the web browser of the data setting apparatus 110, the image processing apparatus 150 sets various parameters by executing the PRC using the method of HTTP under REST protocol, such as GET, POST, PUT, DELELTE, etc.

FIG. 3A is a flowchart illustrating operation of setting the image processing apparatus 150 including the operation of setting parameters, according to an example embodiment of the present invention. FIG. 3B is an illustration for explaining the connection of the image processing apparatus 150 with the data setting apparatus 110 and with the USB memory 320.

At S301, the image processing apparatus 150 is turned on, and the external memory is connected to the image processing apparatus 150. In this example, the USB memory 320 may be used as the external memory. In addition to registering the condition setting log therein, the external memory stores therein information such as authentication information, which may be used to manage the access to the image processing apparatus 150. In this example, the USB memory 320 is inserted into the driver of the image processing apparatus 150.

At S302, the image processing apparatus 150 receives a user input from the user such as the user ID and the password. When the image processing apparatus 150 determines that the user is the administrator who is authorized to set parameters, the image processing apparatus 150 changes the mode of the apparatus to the setting mode. More specifically, in this example, the authentication processor 164 compares the user information input by the user through the input interface 154, with the authentication information regarding the administrator obtained from the USB memory 320. When they match, the image processing apparatus 150 determines that the user is an administrator who is authorized to perform operation of setting. Alternatively, the image processing apparatus 150 may be programmed such that it only permits the user to log in as the administrator only when the USB memory 320 is connected.

At S303, the operator at the image processing apparatus 150 checks the body of the image processing apparatus 150, for example, by moving a moving part of the image processing apparatus 150 including a door or a cover. More specifically, the operator checks whether a light device is lighted when the cover is opened, or the touch panel displays a message when a toner bottle is removed from the body.

At S304, the data setting apparatus 110 is connected to the image processing apparatus 150 through the P2P connection or ad-hoc connection such that the image processing apparatus 150 has an exclusive connection with the data setting apparatus 110 as illustrated in FIG. 3B. Further, at this time, the user logs onto the image processing apparatus 150 through the data setting apparatus 110 to perform operation of setting various parameters.

At S305, the data setting apparatus 110 requests the image processing apparatus 150 to set various parameters, for example, by sending a parameter setting request to the URL of the image processing apparatus 150 previously set. For example, the parameter setting request, which is the HTTP request, may be written as follows.

[Instructions 1]

```
       PUT /atom/edit/parameter HTTP/1.1
       Host: 192.166.27.12
       Content-Type: application/x.atom+xml
       X-WSSE: UsernameToken Username="administrator", ...
       <entry xmlns="http://R_param_setting/resource/param/">
       <parameters>
        <color_registration_param> param="xxxx.xxx"
        </ color_registration_param>
        <second_transfer_current> param ="yyyyy.yyy"
        </second_transfer_current>
        <fix_temperature> param="00F0:hex"
        </fix_temperature>
                        ·
                        ·
                        ·
        </parameter>
```

Further, at S305, the image processing apparatus 150 receives the XML data written as the Instructions 1, for example, through the P2P communication using the cross cable 330. The image processing apparatus 150 executes the ATOM to call the parameter setter 166 of FIG. 1 using the PRC, and registers the called function that is the parameter setter 166 onto its internal memory. More specifically, in this example, the image processing apparatus 150 automatically sets various parameters included in the XML data received from the data setting apparatus 110 at once, by causing the parameter setter 166 to call the respective functions to set the respective parameter values using the PRC.

At S306, after completing the parameter setting, the image processing apparatus 150 clears unnecessary data such as any log data temporarily stored during the setting mode but not needed for the later operation. At this time, the operator disconnects the external memory such as the USB memory 320 from the image processing apparatus 150 as illustrated in FIG. 3B. Further, the operator disconnects the data setting apparatus 110 from the image processing apparatus 150.

At S307, the image processing apparatus 150 receives an input command for instructing the image processing apparatus 150 to change the mode from the setting mode, for example, through the input interface 154 such as the touch panel of the image processing apparatus 150 from the operator. When such input command is received, the mode of the image processing apparatus 150 is changed from the setting mode to the operation mode.

At S308, the image processing apparatus 150 is turned off, for example, according to a user instruction input through the input interface 154. After the power is turned off, the operator disconnects the data setting apparatus 110 from the image processing apparatus 150 as illustrated in FIG. 3B, and the operation ends.

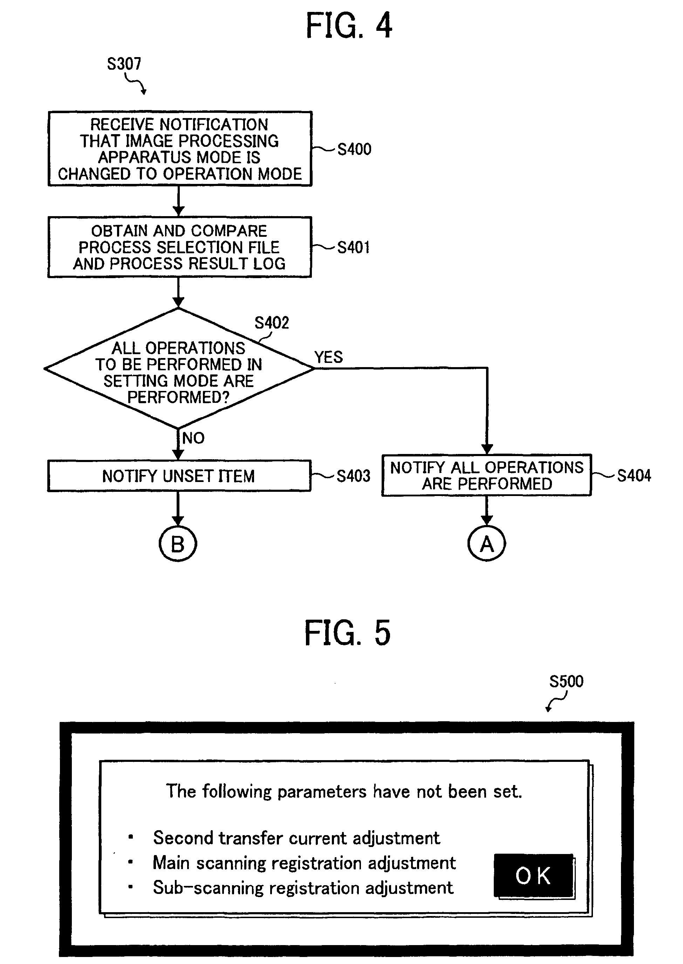

FIG. 4 is a flowchart illustrating operation of checking whether all parameters that are supposed to be set have been set. The operation of FIG. 4 is automatically performed by the data setting apparatus 110 at any desired timing, for example, when the instruction for changing the mode of the image processing apparatus 150 is received from the operator through the image processing apparatus 150 at S307 of FIG. 3A.

At S400, the data setting apparatus 110 receives notification that the operator logs out from the setting mode of the image processing apparatus 150, which is issued by the image processing apparatus 150 when the mode is changed according to an instruction for changing the mode received from the operator.

At S401, the data setting apparatus 110 obtains the process selection file 126 and the process result log 128, and compares between the process selection file 126 and the process result log 128 to generate a comparison result. As described above referring to FIG. 1, the process selection file 126 includes information regarding the plurality of parameters that need to be set, which is previously determined. The process result log 128 includes information indicating the result of performing the operation of setting, which is obtained based on the operation performed through the parameter setter 116.

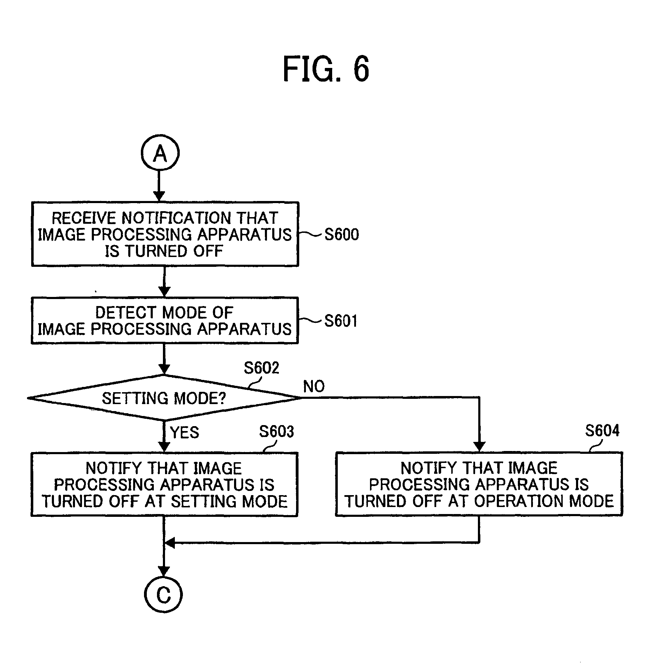

At S402, the data setting apparatus 110 refers to the comparison result generated at S402 to determine whether all operations to be performed at the setting mode, such as the operation of checking and adjusting, have been completed. When it is determined that all operations are performed ("YES" at S402), the operation proceeds to S404 to notify the operator that all operations to be performed at the setting mode have been completed, and further to the operation of FIG. 6 as indicated by "A". When it is determined that all operation to be performed are not performed ("NO" at S402), the operation proceeds to S403 to notify the operator that there are unset items and information regarding the unset items. In such case, the data setting apparatus 110 is caused to display through the output interface 112 an alarm message which requests the operator to set the unset items. The operation then returns to S302 of FIG. 4 as indicated by "B" to cause the image processing apparatus 150 to change to the setting mode.

FIG. 5 is an example alarm screen S500, which is displayed by the data setting apparatus 110 when the data setting apparatus 110 determines that all parameters are not set. As illustrated in FIG. 5, when the setting mode of the image processing apparatus 150 ends without setting all parameters, the data setting apparatus 110 causes the alarm screen S500 of FIG. 5 to display to the operator to notify that the mode of the image processing apparatus 150 is changed from the setting mode to the operation mode without completing setting of all parameters. In this example, it is assumed that the mode of the image processing apparatus 150 has changed to the operation mode. In such case, the operator is requested to login the image processing apparatus 150 as an administrator, and cause the mode of the image processing apparatus 150 to change from the operation mode to the setting mode.

Further, in this example, the data setting apparatus 110 stores information regarding the program name of the program for executing the unset item or the starting point in a queue memory, when the unset item is detected. Assuming that the image processing apparatus 150 has changed to the setting mode, the data setting apparatus 110 obtains the starting point from the queue memory, and send such information to the image processing apparatus 150, thus allowing the setting process to be performed more efficiently.

The operation of FIG. 5 may be performed at any desired time other than the time when the instruction for changing the mode is received. For example, the operation of FIG. 5 may be performed when the operator disconnects the external memory such as the USB memory 320 at S306 of FIG. 5. Alternatively, such desired time may include, but not limited to, the time when the exclusive connection is disconnected, and the time when the power of the image processing apparatus or the data setting apparatus is turned off. In addition to checking whether all parameters have been set, the data setting apparatus 110 may check whether all unnecessary data have been deleted from the internal memory of the image processing apparatus 150.

FIG. 6 illustrates a flowchart illustrating operation of ending the operation of setting, performed by the data setting apparatus 110. The operation of FIG. 6 may be automatically performed by the data setting apparatus 110 at any desired timing, for example, after S404 of FIG. 4.

At S600, the data setting apparatus 110 is notified from the image processing apparatus 150 that the power of the image processing apparatus 150 is turned off, for example, according to an instruction received from the operator.

At S601, the mode change manager 162 detects the mode status of the image processing apparatus 150, which is the most recent mode of the image processing apparatus 150, and sends information regarding the detected mode to the mode checker 122 of the data setting apparatus 110.

At S602, the data setting apparatus 110 determines whether the most recent mode of the image processing apparatus 150 obtained at S601 is the setting mode. When it is determined that the most recent mode is the setting mode ("YES" at S602), the operation proceeds to S603 to notify the operator that the image processing apparatus 150 is turned off at the setting mode, for example, by displaying an alarm message. In such case, the alarm message may request the operator to input a user instruction for changing the setting mode to the operation mode. S603 may be repeated until the mode is changed to the operation mode.

When it is determined that the most recent mode is the operation mode ("NO" at S602), the operation proceeds to S604 to notify the operator that the image processing apparatus 150 is turned off at the operation mode, for example, by displaying a confirmation message, and the operation ends. S604 of displaying the confirmation message may not be performed.

The operation of FIG. 6 may be performed at any desired time other than the time when the instruction for turning off the image processing apparatus 150 is received. For example, the operation of FIG. 6 may be performed after the operator disconnects the data setting apparatus 110 from the image processing apparatus 150.

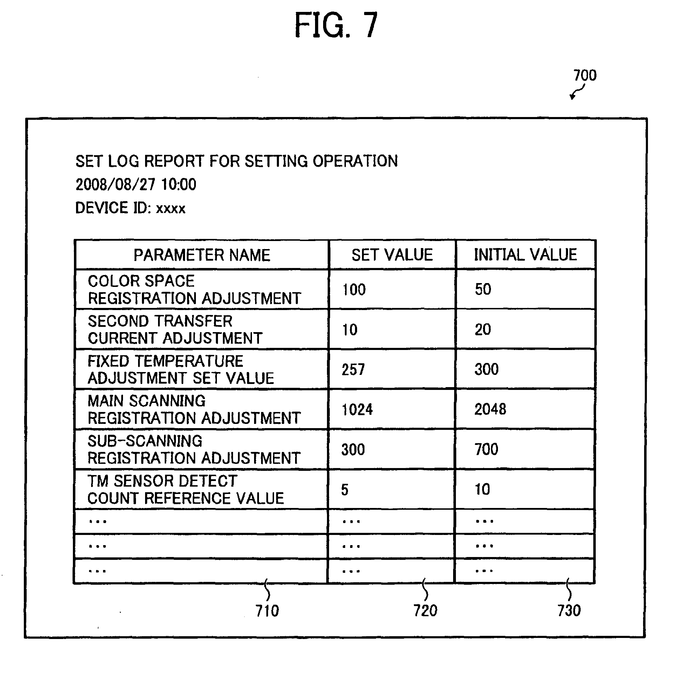

FIG. 7 is an example set log report 700, which may be output by the operation log output 170 of the image processing apparatus 150 at any desired time after the operator logs out from the setting mode. The set log report 700 of FIG. 7 includes a column 710 which lists a plurality of parameter names each being set, a column 720 which lists a plurality of set values or parameter values that are each set by the image processing apparatus 150 according to the request received from the data setting apparatus 110, and a column 730 which lists a plurality of initial values of the image processing apparatus 150.

The initial values may be previously set, for example, at the time of performing operation check when the image processing apparatus 150 is being assembled such that the initial sets may vary. In order to cause each parameter value to be in compliance with the specification of the image processing apparatus 150 or the device-specific state of the image processing apparatus 150, the parameter values need to be set for each image processing apparatus 150. The set log report 700 may be output as a printed document or may be sent to the data setting apparatus 110. The set log report 700 of FIG. 7 may be used for the management purpose.

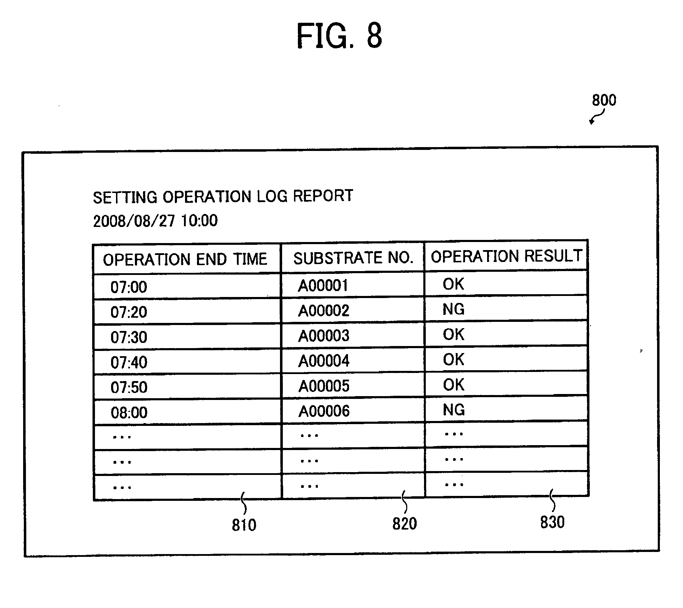

FIG. 8 is an example setting operation log report, which is generated based on the set log report 700 of FIG. 7 and sent to a management server through a network. For example, the management server may be connected to the network under open environment to the data setting apparatus 110. For example, the data setting apparatus 110 changes the network route from the cross cable to the straight cable to connect to the management server. In this manner, the image processing apparatus 150 is prevented from being connected to the network under open environment via the data setting apparatus 110.

In the case of sending the setting operation log report 800 of FIG. 8 to the management server, when turning off of the image processing apparatus 150 is successfully performed, the data setting apparatus 110 may send the setting operation log report of FIG. 8 through the network route using the straight table. Further, when the wireless ad-hoc connection is established with the image processing apparatus 150 in replace of the P2P connection, the arrangement of the cable does not have to be considered, thus sending of the report may be easily performed.

Further, in this example, the data setting apparatus 110 may perform operation of setting with respect to more than one image processing apparatus 150. In such case, a plurality of set log reports 700 is generated for each image processing apparatus 150 by each image processing apparatus 150 and stored in the management server. The data setting apparatus 110 may obtain such reports 700. Based on the plurality of set log reports 700, the data setting apparatus 110 generates and outputs the setting operation log report 800. The setting operation log report 800 may be generated such as to obtain the log of daily, monthly, yearly, etc. In this manner, operation of setting the image processing apparatus 150 is efficiently performed even when there are more than one apparatus.

Referring to FIG. 8, the setting operation log report 800 includes a column 810 indicating the time when the setting operation ends for each one of the operations being performed, a column 820 indicating the substrate number assigned to each one of the image processing apparatuses 150 subjected for setting operation, and a column 830 indicating whether each setting operation is successfully performed.

Further, the image processing apparatus 150 may store any information that is performed by the user who is logged on into its internal memory or external memory. When checking for the unset interns, for example, the image processing apparatus 150 or the data setting apparatus 110 may determine whether any unexpected process is performed other than the process that is supposed to be performed. When any unexpected process is detected, the image processing apparatus 150 or the data setting apparatus 110 may output notification.

The above-described method may be performed by any desired executable program, which may be written using any desired object-oriented programming language including, for example, C++, Java, Java Beans, Java Applet, Java Script, Perl, and Ruby. The above-described program may be stored in any desired computer-readable recording medium for distribution, such as a hard disk drive, CD-ROM, MO, flexible disk, EEPROM, and EPROM. The above-described program may be transmitted through any desired network in any desired format.

- Numerous additional modifications and variations are possible in light of the above teachings. It is therefore to be understood that within the scope of the appended claims, the disclosure of the present invention may be practiced otherwise than as specifically described herein.

With some embodiments of the present invention having thus been described, it will be obvious that the same may be varied in many ways. Such variations are not to be regarded as a departure from the scope of the present invention, and all such modifications are intended to be included within the scope of the present invention as claimed.

For example, elements and/or features of different illustrative embodiments may be combined with each other and/or substituted for each other within the scope of this disclosure and appended claims.

In one example, the operation of setting, for example, the operation of FIG. 3A, may not be performed by the same person. Referring back to FIG. 3A, each step may be performed by a different person who is authorized to perform checking process.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

In one example, the present invention may reside in: an image processing apparatus for providing a plurality of functions related to printing, including: mode change managing means for managing the transition of the mode of the image processing apparatus between a setting mode which allows a user to set various parameters of the image processing apparatus for providing the plurality of functions and an operation mode which allows the user to perform the plurality of functions of the image processing apparatus; network information setting means for setting a network address and a resource address each of which are used for the time for setting the plurality of parameters when the mode change managing means sets the setting mode; network communication means for establishing an exclusive connection between the image processing apparatus and a data setting apparatus and transferring the parameter values sent from the data setting apparatus to the resource address; and parameter setting means for reading the parameter values sent to the resource address by the network communication means and setting the read parameter values as a control value for causing the image processing apparatus to provide the plurality of functions.

In the above-described example, the exclusive connection is the peer-to-peer connection or the ad-hoc connection which exclusively connects between the image processing apparatus and the data setting apparatus.

In the above-described example, the parameter values are written in XML, and the image processing apparatus calls the parameter setting means that corresponds to the resource address.

In the above-described example, the image processing apparatus further includes: log managing means for recording the process log which registers therein the log of the parameters that are set and outputting the process log.

In the above-described example, the image processing apparatus further includes: authentication processing means for controlling the mode change managing means using identification information that is assigned to the user who is authorized to change the mode of the image processing apparatus to the setting mode.

In another example, the present invention may reside in: a data setting apparatus for setting a plurality of parameter values each of which are set respectively for a plurality of functions related to printing of an image processing apparatus. The data setting apparatus includes: parameter setting means for setting the parameter values in XML as an image parameter or a parameter other than the image parameter; and network communication means for sending the parameter values set by the parameter setting means through an exclusive connection established between the image processing apparatus and the data setting apparatus, the parameter values being addressed to a resource address to be used for the time when the parameter values are set by the image processing apparatus.

In the above-described example, the exclusive connection is the peer-to-peer connection or the ad-hoc connection which exclusively connects between the image processing apparatus and the data setting apparatus.

In the above-described example, the data setting apparatus issues the request to the image processing apparatus using the network address to be used for the time when the parameter values are set by the image processing apparatus, and sends the parameter values to the image processing apparatus through the exclusive connection.

In the above-described example, the data setting apparatus further includes: unset checking means for checking whether all of the plurality of parameter values are set based on comparison between the parameters to be processed and the processing result. When the unset parameter is detected, the unset checking means causes the data setting apparatus to display an alarm screen notifying that no all parameters are set.

In another example, the present invention may reside in: a method of setting a plurality of parameters related to printing of an image processing apparatus. The method includes the steps of: changing the mode of the image processing apparatus to a setting mode which allows a user to set the plurality of parameters of the image processing apparatus; setting a network address and a resource address each of which are used for the time for setting the plurality of parameters when the mode of the image processing apparatus is changed to the setting mode; establishing an exclusive connection between the image processing apparatus and a data setting apparatus and transferring the parameter values written in XML and sent from the data setting apparatus to the resource address; reading the parameter values sent to the resource address and calling a parameter setting means that corresponds to the resource address; and recording the process log which registers therein the log of the parameters that are set and outputting the process log.

In the above-described example the exclusive connection is the peer-to-peer connection or the ad-hoc connection which exclusively connects between the image processing apparatus and the data setting apparatus.

In another example, the present invention may reside in: a computer-readable program which causes an image processing apparatus to perform the above-described method.

In another example, the present invention may reside in: a computer-readable program which causes a computer to perform the above-described method.

## Claims

1. A data setting apparatus configured to establish an exclusive connection to an image processing apparatus (150), wherein a network communication means (160) of the image processing apparatus receives a parameter setting request including a plurality of parameter values which is set by a user through the data setting apparatus (110) respectively for various parameters of the image processing apparatus (150), the parameter setting request being addressed to a specific resource which has previously been set to be used when the image processing apparatus (150) is in a setting mode;
the data setting apparatus comprising:
parameter setting means (116) configured to receive a user instruction for setting the plurality of parameter values to register the plurality of parameter values that is set into a process result log (128);
network communication means (130) configured to send the parameter setting request including the plurality of parameter values to the image processing apparatus (150) through the exclusive connection;
unset parameter value checking means (120) configured to check at a first desired timing whether the plurality of parameter values have been all set respectively for the various parameters of the image processing apparatus (150) based on a comparison between the plurality of parameter values registered in the process result log (128) and any parameter values needing to be set which is obtained from a process selection file (126) stored in the data setting apparatus, wherein:
when the unset parameter value checking means (120) detects an unset parameter, the unset parameter value checking means (120) causes an output interface (112) of the data setting apparatus (110) to notify the user that setting of the plurality of parameters has not been completed;
the data setting apparatus further comprising:
mode checking means (122) for checking the mode of the image processing apparatus (150) at a second desired timing, independent of the first desired timing, wherein:
when the mode checking means (122) detects that the mode of the image processing apparatus has not changed from the setting mode to an operation mode, the mode checking means (122) causes the data setting apparatus (110) to notify the user that the mode of the image processing apparatus is the setting mode.

2. A system comprising a data setting apparatus according to claim 1 and an image processing apparatus (150) connected thereto, the image processing apparatus comprising:
mode change managing means (162) for managing the transition of the mode of the image processing apparatus (150) between a setting mode which allows a user to set various parameters of the image processing apparatus (150) and an operation mode which allows the image processing apparatus (150) to perform a plurality of functions of the image processing apparatus (150) according to an instruction received from the user;
network information setting means (156) for setting a network configuration of the image processing apparatus (150) to a predetermined specific network configuration, which is used when the image processing apparatus (150) is in the setting mode;
network communication means (160) for establishing communication between the image processing apparatus (150) and a data setting apparatus (110) when the data setting apparatus (110) is connected to the image processing apparatus (150) and receiving the plurality of parameter values which is set by the user through the data setting apparatus (110) respectively for the various parameters of the image processing apparatus (150) from the data setting apparatus (110); and
parameter setting means (166) for obtaining the plurality of parameter values received through the network communication means (160) and setting the plurality of parameter values to the image processing apparatus (150) so as to cause the image processing apparatus (150) to perform the plurality of functions according to the plurality of parameter values, wherein:
the connection of the image processing apparatus (150) established, in use, with the data setting apparatus (110) is an exclusive connection, and the network communication means (160) receives a parameter setting request including the plurality of parameter values, the parameter setting request being addressed to a specific resource which has previously been set to be used when the image processing apparatus (150) is in the setting mode.

3. A system according to claim 2, wherein the parameter setting request is XML data addressed to the specific resource including the plurality of parameter values, the image processing apparatus being configured such that, when the XML data is received, the image processing apparatus (150) calls the parameter setting means (166) to perform the operation of setting.

4. A system according claim 2 or claim 3, wherein the image processing apparatus comprises:
operation log recording means (168) configured to store the results of setting the plurality of parameter values performed by the parameter setting means (166) in a memory as an operation log; and
operation log output means (170) configured to output the operation log.

5. A system according to claim 4, wherein the image processing apparatus comprises:
authentication processing means (164) configured to determine whether the user is authorized to perform the operation of setting based on information stored in an external memory (320) inserted into the image processing apparatus (150) or on a determination of whether the external memory (320) has been inserted into the image processing apparatus (150).

6. A method for setting an image processing apparatus, comprising:
changing (S302) the mode of the image processing apparatus (150) from an operation mode which allows a user to perform a plurality of functions of the image processing apparatus (150) to a setting mode which allows the image processing apparatus (150) to set various parameters of the image processing apparatus (150) according to an instruction received from the user;
setting (S304) a network configuration of the image processing apparatus (150) to a specific network configuration which has previously been set, the specific network configuration being used when the image processing apparatus (150) is in the setting mode;
establishing (S304) communication between the image processing apparatus (150) and a data setting apparatus (110) when the data setting apparatus (110) is connected to the image processing apparatus (150);
receiving (S305) a plurality of parameter values which is set by the user through the data setting apparatus (110) respectively for the various parameters of the image processing apparatus (150) from the data setting apparatus (110); and
setting (S305) the plurality of parameter values to the image processing apparatus (150) so as to cause the image processing apparatus (150) to perform the plurality of functions according to the plurality of parameter values, wherein:
the connection of the image processing apparatus (150) established with the data setting apparatus (110) is an exclusive connection established between the image processing apparatus (150) and the data setting apparatus (110), and the image processing apparatus (150) receives a parameter setting request including the plurality of parameter values, the parameter setting request being addressed to a specific resource which has previously been set to be used when the image processing apparatus (150) is in the setting mode;
receiving a user instruction for setting the plurality of parameter values from the user through the data setting apparatus (110);
registering the plurality of parameter values that is set into a process result log (128);
checking (S402) at a first desired timing whether the plurality of parameter values have been all set respectively for the various parameters of the image processing apparatus (150) based on comparison between the plurality of parameter values registered in the process result log (128) and the plurality of parameter values needing to be set which is obtained from a process selection file (126); and
notifying (S403) the user that setting of the plurality of parameters is not completed when an unset parameter is detected;
the method further comprising:
checking (S601) the mode of the image processing apparatus (150) at a second desired timing independent of the first timing;
determining (S602) whether the mode of the image processing apparatus has been changed from the setting mode to the operation mode; and
notifying (S603) the user that the mode of the image processing apparatus is the setting mode when it is determined that the mode of the image processing apparatus has not changed from the setting mode to the operation mode.

7. A method according to claim 6, comprising:
storing the results of setting the plurality of parameter values in a memory as an operation log; and
outputting the operation log.

8. A computer program comprising program code means that, when executed on a computer system, instructs the computer system to perform the method of claim 6 or claim 7.

9. A recording medium storing the computer program of claim 8.

## Patentansprüche

1. Dateneinstellvorrichtung, dafür konfiguriert, eine Exklusiwerbindung zu einer Bildverarbeitungsvorrichtung (150) einzurichten, worin ein Netzwerkkommunikationsmittel (160) der Bildverarbeitungsvorrichtung eine Parametereinstellanfrage empfängt, die eine Vielzahl von Parameterwerten einschließt, die durch einen Benutzer über die Dateneinstellvorrichtung (110) jeweils für verschiedene Parameter der Bildverarbeitungsvorrichtung (150) eingestellt wird, wobei die Parametereinstellanfrage an eine spezifische Ressource gerichtet ist, die vorher eingestellt worden ist, um verwendet zu werden, wenn die Bildverarbeitungsvorrichtung (150) in einer Einstellbetriebsart ist;
wobei die Dateneinstellvorrichtung umfasst:
ein Parametereinstellmittel (116), das dafür konfiguriert ist, eine Benutzeranweisung zum Einstellen der Vielzahl von Parameterwerten zu empfangen, um die Vielzahl von Parameterwerten, die eingestellt wird, in einem Prozessergebnislogbuch (128) zu registrieren;
ein Netzwerkkommunikationsmittel (130), das dafür konfiguriert ist, die Parametereinstellanfrage einschließlich der Vielzahl von Parameterwerten über die Exklusiwerbindung an die Bildverarbeitungsvorrichtung (150) zu senden;
ein Prüfmittel für nicht eingestellte Parameter (120), das dafür konfiguriert ist, zu einem ersten gewünschten Zeitpunkt zu prüfen, ob die Vielzahl von Parameterwerten jeweils für die verschiedenen Parameter der Bildverarbeitungsvorrichtung (150) sämtlich eingestellt worden ist, und zwar auf der Grundlage eines Vergleichs zwischen der im Prozessergebnislogbuch (128) registrierten Vielzahl von Parameterwerten und jeglichen Parameterwerten, die einzustellen nötig ist, was aus einer Prozessauswahldatei (126) erlangt wird, die in der Dateneinstellvorrichtung gespeichert ist, worin:
wenn das Prüfmittel für nicht eingestellte Parameter (120) einen nicht eingestellten Parameter ermittelt, das Prüfinittel für nicht eingestellte Parameter (120) eine Ausgabeschnittstelle (112) der Dateneinstellvorrichtung (110) veranlasst, den Benutzer zu benachrichtigen, dass das Einstellen der Vielzahl von Parametern nicht abgeschlossen worden ist;
wobei die Dateneinstellvorrichtung ferner umfasst:
ein Betriebsartprüfmittel (122) zum Prüfen der Betriebsart der Bildverarbeitungsvorrichtung (150) zu einem gewünschten zweiten Zeitpunkt, der vom ersten gewünschten Zeitpunkt unabhängig ist, worin:
wenn das Betriebsartprüfmittel (122) ermittelt, dass die Betriebsart der Bildverarbeitungsvorrichtung nicht von der Einstellbetriebsart zu einer Arbeitsbetriebsart gewechselt hat, das Betriebsartprüfmittel (122) die Dateneinstellvorrichtung (110) veranlasst, den Benutzer zu benachrichtigen, dass die Betriebsart der Bildverarbeitungsvorrichtung die Einstellbetriebsart ist.

2. System, umfassend eine Dateneinstellvorrichtung nach Anspruch 1 und eine damit verbundene Bildverarbeitungsvorrichtung (150), wobei die Bildverarbeitungsvorrichtung umfasst:
ein Betriebsartwechselverwaltungsmittel (162) zum Verwalten des Übergangs der Betriebsart der Bildverarbeitungsvorrichtung (150) zwischen einer Einstellbetriebsart, die einem Benutzer ermöglicht, verschiedene Parameter der Bildverarbeitungsvorrichtung (150) einzustellen, und einer Arbeitsbetriebsart, die der Bildverarbeitungsvorrichtung (150) ermöglicht, eine Vielzahl von Funktionen der Bildverarbeitungsvorrichtung (150) gemäß einer vom Benutzer empfangenen Anweisung durchzuführen;
ein Netzwerkinformationseinstellmittel (156) zum Einstellen einer Netzwerkkonfiguration der Bildverarbeitungsvorrichtung (150) auf eine vorbestimmte spezifische Netzwerkkonfiguration, die verwendet wird, wenn die Bildverarbeitungsvorrichtung (150) in der Einstellbetriebsart ist;
ein Netzwerkkommunikationsmittel (160) zum Einrichten der Kommunikation zwischen der Bildverarbeitungsvorrichtung (150) und einer Dateneinstellvorrichtung (110), wenn die Dateneinstellvorrichtung (110) mit der Bildverarbeitungsvorrichtung (150) verbunden ist, und Empfangen der Vielzahl von Parameterwerten, die durch den Benutzer über die Dateneinstellvorrichtung (110) jeweils für die verschiedenen Parameter der Bildverarbeitungsvorrichtung (150) eingestellt wird, von der Dateneinstellvorrichtung (110), und
ein Parametereinstellmittel (166) zum Erlangen der über das Netzwerkkommunikationsmittel (160) empfangenen Vielzahl von Parameterwerten und Einstellen der Vielzahl von Parameterwerten in der Bildverarbeitungsvorrichtung (150), um dadurch die Bildverarbeitungsvorrichtung (150) zu veranlassen, die Vielzahl von Funktionen gemäß der Vielzahl von Parameterwerten durchzuführen, worin:
die bei Verwendung eingerichtete Verbindung der Bildverarbeitungsvorrichtung (150) mit der Dateneinstellvorrichtung (110) eine Exklusivverbindung ist und das Netzwerkkommunikationsmittel (160) eine Parametereinstellanfrage empfängt, welche die Vielzahl von Parameterwerten einschließt, wobei die Parametereinstellanfrage an eine spezifische Ressource gerichtet ist, die vorher eingestellt worden ist, um verwendet zu werden, wenn die Bildverarbeitungsvorrichtung (150) in der Einstellbetriebsart ist.

3. System nach Anspruch 2, worin die Parametereinstellanfrage an die spezifische Ressource gerichtete XML-Daten sind, welche die Vielzahl von Parameterwerten einschließen, wobei die Bildverarbeitungsvorrichtung so konfiguriert ist, dass die Bildverarbeitungsvorrichtung (150), wenn die XML-Daten empfangen werden, das Parametereinstellmittel (166) aufruft, um die Operation des Einstellens durchzuführen.

4. System nach Anspruch 2 oder 3, worin die Bildverarbeitungsvorrichtung umfasst:
ein Betriebslogbuch-Aufzeichnungsmittel (168), das dafür konfiguriert ist, die Ergebnisse des durch das Parametereinstellmittel (166) durchgeführten Einstellens der Vielzahl von Parameterwerten als ein Betriebslogbuch in einem Speicher zu speichern; und
ein Betriebslogbuch-Ausgabemittel (170), das dafür konfiguriert ist, das Betriebslogbuch auszugeben.

5. System nach Anspruch 4, worin die Bildverarbeitungsvorrichtung umfasst:
ein Authentifizierungsverarbeitungsmittel (164), das dafür konfiguriert ist, zu bestimmen, ob der Benutzer autorisiert ist, die Operation des Einstellens durchzuführen, und zwar auf der Grundlage von Information, die in einem in die Bildverarbeitungsvorrichtung (150) eingeführten externen Speicher (320) gespeichert ist, oder einer Bestimmung, ob der externe Speicher (320) in die Bildverarbeitungsvorrichtung (150) eingeführt worden ist.

6. Verfahren zum Einstellen einer Bildverarbeitungsvorrichtung, umfassend:
Wechseln (S302) der Betriebsart der Bildverarbeitungsvorrichtung (150) von einer Arbeitsbetriebsart, die es einem Benutzer ermöglicht, eine Vielzahl von Funktionen der Bildverarbeitungsvorrichtung (150) durchzuführen, zu einer Einstellbetriebsart, die der Bildverarbeitungsvorrichtung (150) ermöglicht, verschiedene Parameter der Bildverarbeitungsvorrichtung (150) gemäß einer vom Benutzer empfangenen Anweisung einzustellen;
Einstellen (S304) einer Netzwerkkonfiguration der Bildverarbeitungsvorrichtung (150) auf eine spezifische Netzwerkkonfiguration, die vorher eingestellt worden ist, wobei die spezifische Netzwerkkonfiguration verwendet wird, wenn die Bildverarbeitungsvorrichtung (150) in der Einstellbetriebsart ist;
Einrichten (S304) einer Kommunikation zwischen der Bildverarbeitungsvorrichtung (150) und einer Dateneinstellvorrichtung (110), wenn die Dateneinstellvorrichtung (110) mit der Bildverarbeitungsvorrichtung (150) verbunden ist;
Empfangen (S305) einer Vielzahl von Parameterwerten, die durch den Benutzer über die Dateneinstellvorrichtung (110) jeweils für die verschiedenen Parameter der Bildverarbeitungsvorrichtung (150) eingestellt wird, von der Dateneinstellvorrichtung (110), und
Einstellen (S305) der Vielzahl von Parameterwerten in der Bildverarbeitungsvorrichtung (150), um dadurch die Bildverarbeitungsvorrichtung (150) zu veranlassen, die Vielzahl von Funktionen gemäß der Vielzahl von Parameterwerten durchzuführen, worin:
die eingerichtete Verbindung der Bildverarbeitungsvorrichtung (150) mit der Dateneinstellvorrichtung (110) eine zwischen der Bildverarbeitungsvorrichtung (150) und der Dateneinstellvorrichtung (110) eingerichtete Exklusivverbindung ist und die Bildverarbeitungsvorrichtung (150) eine Parametereinstellanfrage empfängt, welche die Vielzahl von Parameterwerten einschließt, wobei die Parametereinstellanfrage an eine spezifische Ressource gerichtet ist, die vorher eingestellt worden ist, um verwendet zu werden, wenn die Bildverarbeitungsvorrichtung (150) in der Einstellbetriebsart ist;
Empfangen einer Benutzeranweisung zum Einstellen der Vielzahl von Parameterwerten vom Benutzer über die Dateneinstellvorrichtung (110);
Registrieren der Vielzahl von Parameterwerten, die eingestellt wird, in einem Prozessergebnislogbuch (128);
Prüfen (S402) zu einem ersten gewünschten Zeitpunkt, ob die Vielzahl von Parameterwerten jeweils für die verschiedenen Parameter der Bildverarbeitungsvorrichtung (150) sämtlich eingestellt worden ist, und zwar auf der Grundlage eines Vergleichs zwischen der im Prozessergebnislogbuch (128) registrierten Vielzahl von Parameterwerten und der Vielzahl von Parameterwerten, die einzustellen nötig ist, was aus einer Prozessauswahldatei (126) erlangt wird; und
Benachrichtigen (S403) des Benutzers, dass das Einstellen der Vielzahl von Parametern nicht abgeschlossen worden ist, wenn ein nicht eingestellter Parameter ermittelt wird;
wobei das Verfahren ferner umfasst:
Prüfen (S601) der Betriebsart der Bildverarbeitungsvorrichtung (150) zu einem gewünschten zweiten Zeitpunkt, der vom ersten gewünschten Zeitpunkt unabhängig ist;
Bestimmen (S602), ob die Betriebsart der Bildverarbeitungsvorrichtung von der Einstellbetriebsart zur Arbeitsbetriebsart gewechselt worden ist; und
Benachrichtigen (S603) des Benutzers, dass die Betriebsart der Bildverarbeitungsvorrichtung die Einstellbetriebsart ist, wenn bestimmt wird, dass die Betriebsart der Bildverarbeitungsvorrichtung nicht von der Einstellbetriebsart zur Arbeitsbetriebsart gewechselt hat.

7. Verfahren nach Anspruch 6, umfassend:
Speichern der Ergebnisse des Einstellens der Vielzahl von Parameterwerten in einem Speicher als Betriebslogbuch; und
Ausgeben des Betriebslogbuchs.

8. Computerprogrammprodukt, umfassend ein Programmcodemittel, das, wenn es auf einem Computersystem ausgeführt wird, das Computersystem anweist, das Verfahren nach Anspruch 6 oder 7 durchzuführen.

9. Aufzeichnungsmedium, welches das Computerprogramm nach Anspruch 8 speichert.

## Revendications

1. Appareil de réglage de données configuré de manière à établir une connexion exclusive à un appareil de traitement d'images (150), dans lequel un moyen de communication de réseau (160) de l'appareil de traitement d'images reçoit une demande de réglage de paramètres incluant une pluralité de valeurs de paramètres qui est réglée par un utilisateur par le biais de l'appareil de réglage de données (110), respectivement, pour de multiples paramètres de l'appareil de traitement d'images (150), la demande de réglage de paramètres étant adressée à une ressource spécifique qui a déjà été définie de manière à être utilisée lorsque l'appareil de traitement d'images (150) est dans un mode de réglage ;
l'appareil de réglage de données comprenant :
un moyen de réglage de paramètres (116) configuré de manière à recevoir une instruction d'utilisateur visant à définir la pluralité de valeurs de paramètres en vue d'enregistrer la pluralité de valeurs de paramètres qui est réglée dans un journal de résultats de processus (128) ;
un moyen de communication de réseau (130) configuré de manière à envoyer la demande de réglage de paramètres incluant la pluralité de valeurs de paramètres à l'appareil de traitement d'images (150) par le biais de la connexion exclusive ;
un moyen de vérification de valeurs de paramètres non réglées (120) configuré de manière à vérifier, au cours d'une première temporisation souhaitée, si la totalité de la pluralité de valeurs de paramètres a été réglée respectivement pour les multiples paramètres de l'appareil de traitement d'images (150) sur la base d'une comparaison entre la pluralité de valeurs de paramètres enregistrée dans le journal de résultats de processus (128) et des quelconques valeurs de paramètres devant être réglées, laquelle est obtenue à partir d'un fichier de sélection de processus (126) stocké dans l'appareil de réglage de données, dans lequel :
lorsque le moyen de vérification de valeurs de paramètres non réglées (120) détecte un paramètre non réglé, le moyen de vérification de valeurs de paramètres non réglées (120) amène une interface de sortie (112) de l'appareil de réglage de données (110) à signaler à l'utilisateur que le réglage de la pluralité de paramètres n'a pas été terminé ;
l'appareil de réglage de données comprenant en outre :
un moyen de vérification de mode (122) destiné à vérifier le mode de l'appareil de traitement d'images (150) au cours d'une seconde temporisation souhaitée, indépendante de la première temporisation souhaitée, dans lequel :
lorsque le moyen de vérification de mode (122) détecte que le mode de l'appareil de traitement d'images n'a pas été modifié, du mode de réglage à un mode d'exploitation, le moyen de vérification de mode (122) amène l'appareil de réglage de données (110) à signaler à l'utilisateur que le mode de l'appareil de traitement d'images est le mode de réglage.

2. Système comprenant un appareil de réglage de données selon la revendication 1, et un appareil de traitement d'images (150) connecté à celui-ci, l'appareil de traitement d'images comprenant :
un moyen de gestion de modification de mode (162) pour gérer la transition du mode de l'appareil de traitement d'images (150) entre un mode de réglage qui permet à un utilisateur de régler de multiples paramètres de l'appareil de traitement d'images (150) et un mode d'exploitation qui permet à l'appareil de traitement d'images (150) de mettre en oeuvre une pluralité de fonctions de l'appareil de traitement d'images (150) selon une instruction reçue en provenance de l'utilisateur ;
un moyen de réglage d'informations de réseau (156) pour régler une configuration de réseau de l'appareil de traitement d'images (150) sur une configuration de réseau spécifique prédéterminée, laquelle est utilisée lorsque l'appareil de traitement d'images (150) est dans le mode de réglage ;
un moyen de communication de réseau (160) pour établir une communication entre l'appareil de traitement d'images (150) et un appareil de réglage de données (110) lorsque l'appareil de réglage de données (110) est connecté à l'appareil de traitement d'images (150), et recevoir la pluralité de valeurs de paramètres qui est réglée par l'utilisateur par le biais de l'appareil de réglage de données (110) respectivement pour les multiples paramètres de l'appareil de traitement d'images (150) à partir de l'appareil de réglage de données (110) ; et
un moyen de réglage de paramètres (166) pour obtenir la pluralité de valeurs de paramètres reçue par l'intermédiaire du moyen de communication de réseau (160) et régler la pluralité de valeurs de paramètres sur l'appareil de traitement d'images (150), de manière à amener l'appareil de traitement d'images (150) à mettre en oeuvre la pluralité de fonctions selon la pluralité de valeurs de paramètres, dans lequel :
la connexion de l'appareil de traitement d'images (150) établie, en cours d'utilisation, avec l'appareil de réglage de données (110), est une connexion exclusive, et le moyen de communication de réseau (160) reçoit une demande de réglage de paramètres incluant la pluralité de valeurs de paramètres, la demande de réglage de paramètres étant adressée à une ressource spécifique qui a déjà été réglée de manière à être utilisée lorsque l'appareil de traitement d'images (150) est dans le mode de réglage.

3. Système selon la revendication 2, dans lequel la demande de réglage de paramètres correspond à des données XML adressées à la ressource spécifique incluant la pluralité de valeurs de paramètres, l'appareil de traitement d'images étant configuré de sorte que, lorsque les données XML sont reçues, l'appareil de traitement d'images (150) invite le moyen de réglage de paramètres (166) à mettre en oeuvre l'opération de réglage.

4. Système selon la revendication 2 ou 3, dans lequel l'appareil de traitement d'images comprend :
un moyen d'enregistrement de journal d'opérations (168) configuré de manière à stocker les résultats du réglage de la pluralité de valeurs de paramètres mis en oeuvre par le moyen de réglage de paramètres (166), dans une mémoire, sous la forme d'un journal d'opérations ; et
un moyen de génération en sortie de journal d'opérations (170) configuré de manière à générer en sortie le journal d'opérations.

5. Système selon la revendication 4, dans lequel l'appareil de traitement d'images comprend :
un moyen de traitement d'authentification (164) configuré de manière à déterminer si l'utilisateur est autorisé à mettre en oeuvre l'opération de réglage sur la base des informations stockées dans une mémoire externe (320) intégrée dans l'appareil de traitement d'images (150), ou sur la base d'une détermination selon laquelle la mémoire externe (320) a été intégrée dans l'appareil de traitement d'images (150).

6. Procédé de réglage d'un appareil de traitement d'images, comprenant les étapes ci-dessous consistant à :
modifier (S302) le mode de l'appareil de traitement d'images (150), d'un mode d'exploitation qui permet à un utilisateur de mettre en oeuvre une pluralité de fonctions de l'appareil de traitement d'images (150), à un mode de réglage qui permet à l'appareil de traitement d'images (150) de régler de multiples paramètres de l'appareil de traitement d'images (150) selon une instruction reçue en provenance de l'utilisateur ;
régler (S304) une configuration de réseau de l'appareil de traitement d'images (150) sur une configuration de réseau spécifique qui a déjà été réglée, la configuration de réseau spécifique étant utilisée lorsque l'appareil de traitement d'images (150) est dans le mode de réglage ;
établir (S304) une communication entre l'appareil de traitement d'images (150) et un appareil de réglage de données (110) lorsque l'appareil de réglage de données (110) est connecté à l'appareil de traitement d'images (150) ;
recevoir (S305) une pluralité de valeurs de paramètres qui est réglée par l'utilisateur par le biais de l'appareil de réglage de données (110), respectivement, pour les multiples paramètres de l'appareil de traitement d'images (150) à partir de l'appareil de réglage de données (110) ; et
régler (S305) la pluralité de valeurs de paramètres sur l'appareil de traitement d'images (150) de manière à amener l'appareil de traitement d'images (150) à mettre en oeuvre la pluralité de fonctions selon la pluralité de valeurs de paramètres, dans lequel :
la connexion de l'appareil de traitement d'images (150), établie avec l'appareil de réglage de données (110), est une connexion exclusive établie entre l'appareil de traitement d'images (150) et l'appareil de réglage de données (110), et l'appareil de traitement d'images (150) reçoit une demande de réglage de paramètres incluant la pluralité de valeurs de paramètres, la demande de réglage de paramètres étant adressée à une ressource spécifique qui a déjà été réglée de manière à être utilisée lorsque l'appareil de traitement d'images (150) est dans le mode de réglage ;
recevoir une instruction d'utilisateur, visant à régler la pluralité de valeurs de paramètres, en provenance de l'utilisateur, par le biais de l'appareil de réglage de données (110) ;
enregistrer la pluralité de valeurs de paramètres qui est réglée dans un journal de résultats de processus (128) ;
vérifier (S402), au cours d'une première temporisation souhaitée, si la totalité de la pluralité de valeurs de paramètres a été réglée respectivement pour les multiples paramètres de l'appareil de traitement d'images (150) sur la base d'une comparaison entre la pluralité de valeurs de paramètres enregistrée dans le journal de résultats de processus (128) et la pluralité de valeurs de paramètres devant être réglée, laquelle est obtenue à partir d'un fichier de sélection de processus (126) ; et
signaler (S403) à l'utilisateur que le réglage de la pluralité de paramètres n'est pas terminé, lorsqu'un paramètre non réglé est détecté ;
le procédé comprenant en outre les étapes ci-dessous consistant à :
vérifier (S601) le mode de l'appareil de traitement d'images (150) au cours d'une seconde temporisation souhaitée indépendante de la première temporisation ;
déterminer (S602) si le mode de l'appareil de traitement d'images a été modifié, du mode de réglage au mode d'exploitation ; et
signaler (S603) à l'utilisateur que le mode de l'appareil de traitement d'images est le mode de réglage lorsqu'il est déterminé que le mode de l'appareil de traitement d'images n'a pas été modifié, du mode de réglage au mode d'exploitation.

7. Procédé selon la revendication 6, comprenant les étapes ci-dessous consistant à :
stocker les résultats du réglage de la pluralité de valeurs de paramètres dans une mémoire, sous la forme d'un journal d'opérations ; et
générer en sortie le journal d'opérations.

8. Programme informatique comprenant un moyen de code de programme qui, lorsqu'il est exécuté sur un système informatique, ordonne au système informatique de mettre en oeuvre le procédé selon la revendication 6 ou 7.

9. Support d'enregistrement stockant le programme informatique selon la revendication 8.
